# EUROPÄISCHE PATENTANMELDUNG

(11) **EP 2 375 711 A1**
(43) Veröffentlichungstag der Anmeldung: **12.10.2011**
(21) Anmeldenummer: 10182196.5
(22) Anmeldetag: 15.09.1998
(51) Int. Cl.: H04M 1/72, H04M 1/02, H04B 1/38

(54) **Funkgerät**

(30) Priorität: 06.11.1997 DE 19749069
(62) Teilanmeldung aus: 07011387.3
(71) Anmelder: IPCom GmbH & Co. KG, 82049 Pullach (DE)
(72) Erfinder: Hassend Van Gen, Kay, 59174, Kamen (DE)
(74) Vertreter: Leske, Thomas

(57) **Zusammenfassung**

Es wird ein Funkgerät (1), insbesondere ein Mobiltelephon vorgeschlagen, das einen geringeren Platzbedarf ermöglicht. Das Funkgerät (1) umfaßt eine Akkumulatoraufnahme (5) und eine Kartenaufnahme (10). Weiterhin ist eine Leiterplatte (15) vorgesehen. Die Akkumulatoraufnahme (5) und die Kartenaufnahme (10) sind auf derselben Seite der Leiterplatte (15) angeordnet. Die Akkumulatoraufnahme (5) und die Kartenaufnahme (10) sind längs der Leiterplatte (15) benachbart angeordnet.

## Beschreibung

Die Erfindung geht von einem Funkgerät nach der Gattung des Hauptanspruchs aus.

Aus dem Bosch Telecom-Katalog "Bosch-Mobiltelephone 1996/97. Erfrischende Ideen für unterhaltsame Verbindungen." sind bereits als Mobiltelephone ausgebildete Funkgeräte bekannt, die eine Akkumulatoraufnahme und eine Telephonkartenaufnahme für eine SIM-Telephon-Netzkarte (Subscriber Identification Module) umfassen. Die SIM-Telephon-Netzkarte ermöglicht das Telephonieren im jeweiligen Mobilfunknetz, enthält die persönliche Rufnummer und einen schützenden Zugangsberechtigungscode, beispielsweise in Form einer vierstelligen Zahl, durch deren Eingabe am Mobiltelephon sich der Benutzer einer Telephon-Netzkarte als befugt ausweist, und ist Speicher für z. B. Telephonbuch-Einträge.

### Vorteile der Erfindung

Das erfindungsgemäße Funkgerät mit den Merkmalen des Hauptanspruchs hat demgegenüber den Vorteil, daß die Akkumulatoraufnahme und die Kartenaufnahme auf derselben Seite der Leiterplatte angeordnet sind und daß die Akkumulatoraufnahme und die Kartenaufnahme längs der Leiterplatte benachbart angeordnet sind. Auf diese Weise läßt sich eine geringe Höhe des Funkgerätes realisieren. Dadurch wird die Benutzerfreundlichkeit des Funkgerätes erhöht, da es leichter von einer Hand eines Benutzers umgriffen und platzsparender, beispielsweise in einer Jackentasche aufbewahrt werden kann.

Die geringe Höhe des erfindungsgemäßen Funkgerätes ergibt sich insbesondere im Vergleich zu einer Anordnung der Kartenaufnahme zwischen der Akkumulatoraufnahme und der Leiterplatte.

Ein weiterer Vorteil besteht darin, daß durch die benachbarte Anordnung der Akkumulatoraufnahme und der Kartenaufnahme längs der Leiterplatte die Akkumulatoraufnahme und die Kartenaufnahme gleichzeitig von außen zugänglich gestaltet werden können im Gegensatz zu einer Anordnung, bei der die Kartenaufnahme zwischen der Akkumulatoraufnahme und der Leiterplatte angeordnet ist und die Kartenaufnahme somit nur bei aus der Akkumulatoraufnahme entferntem Akkumulator von außen zugänglich ist. Der Vorgang des Einlegens bzw. der Entnahme einer Telephon-Netzkarte oder Zugangsberechtigungskarte in bzw. aus der Kartenaufnahme wird somit für den Benutzer erheblich vereinfacht.

Durch die im Unteranspruch aufgeführte Maßnahme ist eine vorteilhafte Weiterbildung und Verbesserung des im Hauptanspruch angegebenen Funkgerätes möglich.

Vorteilhaft ist dabei, daß die Kartenaufnahme nur bei aus der Akkumulatoraufnahme entferntem Akkumulator zugänglich ist. Durch den entnommenen Akkumulator wird sichergestellt, daß sich während der Einlage bzw. Entnahme der Karte keine Spannung auf dem Funkgerät befindet. Dadurch werden Schäden am Funkgerät und/oder der Karte ausgeschlossen. Außerdem ist eine in die Kartenaufnahme eingelegte Telephon-Netzkarte oder Zugangsberechtigungskarte besser vor unbeabsichtigtem Herausfallen geschützt, da sie nur bei aus der Akkumulatoraufnahme entferntem Akkumulator einlegbar bzw. herausnehmbar ist. Gleichzeitig ist bei einer solchen Anordnung eine in die Kartenaufnahme eingelegte Telephon-Netzkarte oder Zugangsberechtigungskarte besser vor äußeren Einflüssen, wie beispielsweise Witterungseinflüssen, Stößen oder dergleichen geschützt. Desweiteren kann durch die benachbarte Anordnung der Akkumulatorenaufnahme und der Kartenaufnahme längs der Leiterplatte auf eine von außen sichtbare "Klappe" verzichtet werden, wodurch das äußere Erscheinungsbild des Funkgerätes nicht gestört bzw. verschlechtert wird.

### Zeichnung

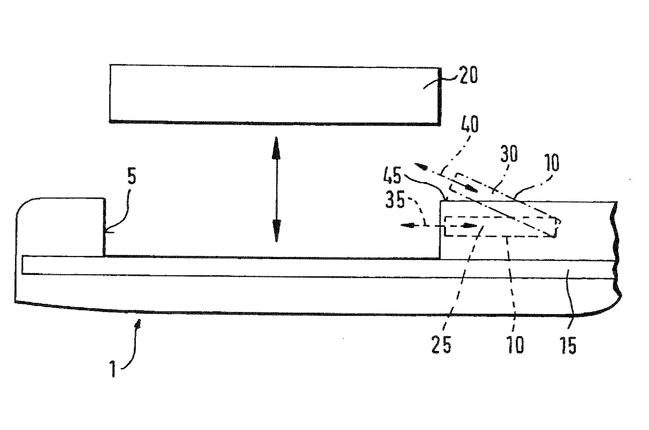

Ein Ausführungsbeispiel der Erfindung ist in der Zeichnung dargestellt und in der nachfolgenden Beschreibung näher erläutert. Es zeigt die einzige Figur eine Seitenansicht eines erfindungsgemäßen Funkgerätes.

### Beschreibung des Ausführungsbeispiels

In der einzigen Figur kennzeichnet 1 ein beispielsweise als Mobiltelephon ausgebildetes Funkgerät. Bei dem Funkgerät 1 kann es sich jedoch auch um ein Schnurlostelephon, ein Betriebsfunkgerät, ein Handfunkgerät oder dergleichen handeln. Das Funkgerät 1 umfaßt eine Leiterplatte 15, eine Akkumulatoraufnahme 5 und eine Kartenaufnahme 10 zur Aufnahme einer Telephon-Netzkarte, einer Zugangsberechtigungskarte oder dergleichen. Bei der Telephon-Netzkarte kann es sich beispielsweise um eine SIM-Telephon-Netzkarte handeln (Subscriber Identification Module). Eine solche SIM-Telephon-Netzkarte ermöglicht das Telephonieren im jeweiligen Netz, enthält eine Rufnummer des Funkgerätes 1 und einen schützenden Zugangsberechtigungscode, beispielsweise in Form einer vierstelligen Zahl, durch deren Eingabe an einer Bedienoberfläche des Funkgerätes 1 sich ein Benutzer der SIM-Telephon-Netzkarte als befugt ausweisen kann, und kann zusätzlich Speicher für z. B. Telefonbuch-Einträge sein. Die SIM-Telephon-Netzkarte ist dazu vorzugsweise als Chipkarte ausgebildet, kann jedoch alternativ oder zusätzlich auch einen Magnetstreifen oder dergleichen als Speichermodul umfassen. Zum Auslesen einer in die Kartenaufnahme 10 eingelegten Telephon-Netzkarte, Zugangsberechtigungskarte oder dergleichen ist eine in der Figur nicht dargestellte Kartenlesevorrichtung vorgesehen, die in der Lage ist, das Speichermodul der eingelegten Karte auszulesen.

Die Akumulatoraufnahme 5 und die Kartenaufnahme 10 sind auf derselben Seite der Leiterplatte 15 angeordnet. Dabei sind die Akkumulatoraufnahme 5 und die Kartenaufnahme 10 längs der Leiterplatte 15 benachbart angeordnet.

Für die Ausbildung der Kartenaufnahme 10 sind dabei prinzipiell zwei verschiedene Realisierungskonzepte möglich. Zum einen kann die Kartenaufnahme 10 so ausgestaltet sein, daß sie nur nach Entfernung eines Akkumulators 20 aus der Akkumulatoraufnahme 5 zur Einführung oder Entnahme einer Karte von außen zugänglich ist. Dabei ist die Kartenaufnahme 10 in einer Ebene, die zur Leiterplatte 15 etwa parallel verläuft, in einer ersten Position 25 angeordnet, so daß eine Karteneinführung bzw. -entnahme gemäß einem ersten Doppelpfeil 35 nur über die benachbarte Akkumulatoraufnahme 5 möglich ist. Somit ist bei in die Akkumulatoraufnahme 5 eingelegtem Akkumulator 20 die Kartenaufnahme 10 in ihrer ersten Position 25 über die Akkumulatoraufnahme 5 zur Einführung oder Entfernung einer Karte nicht zugänglich.

In einer zweiten Realisierungsform kann die Kartenaufnahme 10 im Funkgerät 1 von der ersten Position 25 in eine zweite Position 30 klappbar ausgeführt sein, so daß gemäß einem zweiten Doppelpfeil 40 eine Einführung oder Entnahme einer Karte in bzw. aus der Kartenaufnahme 10 in der zweiten Position 30 auch bei in die Akkumulatoraufnahme 5 eingelegtem Akkumulator 20 möglich ist, da in dieser zweiten Position 30 die Kartenaufnahme 10 nicht über die Akkumulatoraufnahme 5, sondern über eine Oberfläche 45 des Funkgerätes 1 zugänglich ist.

Die Kartenaufnahme 10 kann dabei beispielsweise in Schubladenform ausgebildet sein, so daß die Einführung bzw. Entnahme einer als Telephon-Netzkarte, als Zugangsberechtigungskarte oder dergleichen ausgebildeten Telephonkarte in bzw. aus der Kartenaufnahme 10 für den Benutzer erleichtert wird. Gegebenenfalls kann auch ein Ausschubmechanismus für die Kartenaufnahme 10 realisiert sein, der beispielsweise durch Druck auf die Kartenaufnahme 10 eine eingelegte Karte in eine Entnahmeposition befördert, aus der sie vom Benutzer leicht entnommen werden kann. Für die bei der zweiten beschriebenen Realisierungsform der Kartenaufnahme 10 erforderliche Klappbewegung zur Einführung bzw. Entnahme einer Karte in der zweiten Position 30 kann beispielsweise ein unabhängig von der Akkumulatoraufnahme 5 von außen zugänglicher Drucktaster vorgesehen sein. Das Einklappen der Kartenaufnahme 10 von der zweiten Position 30 in die erste Position 25 kann beispielsweise durch Eindrücken der Kartenaufnahme 10 von der zweiten Position 30 in die erste Position 25 durch den Benutzer erfolgen, wobei die Kartenaufnahme 10 dann in der ersten Position 25 einrastet.

Da die Kartenaufnahme 10 einen Platzbedarf von in der Höhe zur Zeit etwa 3mm erfordert, ergibt sich bei der erfindungsgemäßen Anordnung der Akkumulatoraufnahme 5 und der Kartenaufnahme 10 eine Einsparung in der Höhe des Funkgerätes 1 gegenüber einer Anordnung der Kartenaufnahme 10 zwischen der Leiterplatte 15 und der Akkumulatoraufnahme 5 von etwa 3mm für die Höhe des Funkgerätes 1.

Bevorzugte Ausführungsformen der vorliegenden Erfindung ergeben sich aus den folgenden Aspekten
1. Funkgerät (1), insbesondere Mobiltelefon, mit einer Akkumulatoraufnahme (5) und einer Kartenaufnahme (10), dadurch gekennzeichnet, daß eine Leiterplatte (15) vorgesehen ist, daß die Akkumulatoraufnahme (5) und die Kartenaufnahme (10) auf derselben Seite der Leiterplatte (15) angeordnet sind und daß die Akkumulatoraufnahme (5) und die Kartenaufnahme (10) längs der Leiterplatte (15) benachbart angeordnet sind.
2. Funkgerät (1) nach Aspekt 1, dadurch gekennzeichnet, daß die Kartenaufnahme (10) nur bei aus der Akkumulatoraufnahme (5) entferntem Akkumulator (20) zugänglich ist.

## Patentansprüche

1. Funkgerät (1), insbesondere Mobiltelefon, mit einer Akkumulatoraufnahme (5), einer Kartenaufnahme (10) zur Aufnahme einer Telefonnetzkarte und einer Leiterplatte (15), wobei die Akkumulatoraufnahme (5) und die Kartenaufnahme (10) auf derselben Seite der Leiterplatte (15) angeordnet sind, wobei eine Karteneinführung bzw. Kartenentnahme nur über die Akkumulatoraufnahme (5) möglich ist, und wobei die Akkumulatoraufnahme (5) und die Kartenaufnahme (10) längs der Leiterplatte (15) benachbart angeordnet sind, derart, dass eine geringe Höhe des Funkgeräts im Vergleich zu einer Anordnung der Kartenaufnahme zwischen der Akkumulatoraufnahme und der Leiterplatte realisierbar ist.
